# EUROPÄISCHE PATENTANMELDUNG

(11) **EP 4 786 302 A1**
(43) Veröffentlichungstag der Anmeldung: **05.08.2026**
(21) Anmeldenummer: 26151055.6
(22) Anmeldetag: 09.01.2026
(51) Int. Cl.: B61D 17/04, B61D 17/08, B62D 29/00

(54) **FÜGEVERBINDUNG EINER TEILDIFFERENTIALEN FLACHBAUGRUPPE UND EINES QUERPROFILS**

(30) Priorität: 31.01.2025 DE 102025103664; 25.03.2025 DE 102025111565
(71) Anmelder: Siemens Mobility GmbH, 80997 München (DE)
(72) Erfinder: Kuhn, Daniel, 47829 Krefeld (DE)
(74) Vertreter: Siemens Patent Attorneys

(57) **Zusammenfassung**

Die Erfindung betrifft eine teildifferentiale Gehäusekomponente (1), welche eine erste Teilkomponente (2) mit horizontal verlaufenden Stringern (3, 3a, 3b), eine zweite Teilkomponente (12) mit einem Querprofil und eine feste Verbindung zwischen der ersten Teilkomponente (2) und der zweiten Teilkomponente (12) aufweist. Eine Stirnseite der Stringer (3, 3a, 3b) der ersten Teilkomponente (2) ist mit dem Querprofil der zweiten Teilkomponente (12) fest verbunden. Es wird auch ein Wagenkasten (51) beschrieben. Weiterhin wird auch ein Schienenfahrzeug (50) beschrieben. Außerdem wird ein Verfahren zum Fügen einer teildifferentialen Gehäusekomponente (1) beschrieben.

## Beschreibung

Die Erfindung betrifft eine teildifferentiale Gehäusekomponente. Darüber hinaus betrifft die Erfindung einen Wagenkasten mit einer solchen teildifferentialen Gehäusekomponente. Zudem bezieht sich die Erfindung auf ein Schienenfahrzeug. Außerdem betrifft die Erfindung ein Verfahren zum Fügen einer teildifferentialen Gehäusekomponente.

Transportmittel benötigen tragende Strukturen und Gehäuse, um Personen oder Gegenstände sicher an ihr Ziel zu transportieren. Bei Schienenfahrzeugen umfassen Wagons, Triebfahrzeuge oder Zugfahrzeuge üblicherweise einen sogenannten Wagenkasten, der heutzutage in selbsttragender Bauweise ausgeführt ist.

Unter selbsttragender Bauweise versteht man die Verwendung eines Wagenkastens, der keinen besonderen Rahmen bzw. Untergestell besitzt. Der Wagenkasten selbst nimmt sämtliche Zug- und Stoßkräfte auf. Er ist dabei in der Regel wie eine Vierkant-Röhre aufgebaut: seitlich werden Öffnungen in Form von Türen und Fensterbändern eingebracht, unten befinden sich Flansche zur Aufnahme des Fahrgestells, vorne und hinten Aufnahmen für Wagenpuffer und Wagenkupplung. Heute sind selbsttragende Wagenkästen die Regel, dabei werden unterschiedliche Bauweisen verwendet:
Bei der Integralbauweise werden Strangpressprofile eingesetzt, die sich über die gesamte Länge des Wagenkastens erstrecken und Breiten von etwa einem halben Meter aufweisen. Die einzelnen Profile werden mithilfe von Längsschweißungen verbunden. Zuvor werden mittels Fräsmaschine Aussparungen für Fenster, Türen, Durchbrüche, Lüftungsgitter etc. erstellt. Nach dem Zusammenschweißen werden diese Ausschnitte erneut mittels einer Fräsmaschine auf ihr jeweiliges Nennmaß aufgeweitet. Die Wagenkastenunterseite wird ebenfalls aus Strangpressprofilen hergestellt, sodass ein selbsttragender Wagenkasten entsteht. An der Unterseite werden Nuten erstellt, um den Wagenkasten auf die Drehgestelle aufsetzen und Bauteile wie Transformatoren oder Fahrmotoren im Unterboden anbringen zu können. Die Steifigkeit des Wagenkastens wird bei der Integralbauweise durch die Struktur der Strangpressprofile erreicht, sodass keine zusätzlichen tragenden Elemente notwendig sind und eine Leichtbauweise ermöglicht wird.

Der Fertigungsaufwand ist vergleichsweise gering. Die Fertigung ist weitgehend automatisierbar. Durch individuelle Gestaltung der Strangpressprofile ist ein komplexes Außendesign möglich. Allerdings können Strangpressprofile nur aus Aluminium gefertigt werden und sind daher mit hohen Material- und Werkzeugkosten verbunden. Die Fertigung großer Strangpressprofile mit komplexen Geometrien ist anspruchsvoll. Der Querschnitt des Strangpressprofils ist über die Länge durchgehend, wodurch keine Steifigkeitsänderungen möglich sind und daher auch kaum zusätzliches Leichtbaupotenzial möglich ist. Die Festigkeit von Aluminium-Schweißverbindungen ist gegenüber dem ungestörten Werkstoff in der Regel deutlich geringer. Die Unfallinstandsetzung ist mit einem hohen Aufwand verbunden. Wirtschaftlich wird die Integralbauweise vor allem bei großen Serien, wodurch sich der hohe Aufwand für die Entwicklung und Fertigung von Strangpressprofilen amortisiert.

Eine in den meisten Fällen leichtere Bauweise, insbesondere von Aluminiumrohbauten, kann durch eine Differentialbauweise realisiert werden, welche bei Stahlrohbauten Standard ist und auch in den ersten Generationen von Aluminium-Rohbauten standardmäßig eingesetzt wurde, bis sie in den meisten Schienenfahrzeugen durch die Integralbauweise ersetzt wurde. In Fahrzeugen mit besonders hohen Anforderungen an den Leichtbau kann die Differentialbauweise auch heute eine bevorzugte Alternative sein, wobei üblicherweise einschalige Strukturen mit angefügten Verstärkungen versehen werden. Dabei werden Spanten und / oder Stringer in festgelegten Rastern auf die einschalige Struktur aufgebracht, um die Struktur auszusteifen.

Bei der Differential- oder Rohkastenbauweise wird zunächst ein tragendes Stahl- oder Aluminiumskelett aus horizontal verlaufenden Stringern und vertikal verlaufenden Spanten erstellt, auf das anschließend Bleche zur Beplankung aufgebracht werden. Die Differentialbauweise ist das einfachste und kostengünstigste Verfahren zur Erstellung eines Wagenkastens. Dies hat folgende Gründe: Es können auf Elementebene standardisierte Metall-Halbzeuge (z. B. Bleche) verwendet werden. Die Werkzeugkosten für die Fertigung sind gering, unter anderem weil einfache Fertigungstechnologien verwendet werden können. Instandsetzungen sind relativ einfach möglich. So können die nach einem Unfall verbeulten Außenbleche ausgetauscht werden. Die dazu notwendigen Schrauben sind entweder durch Leisten verdeckt oder außerhalb des eigentlichen Sichtbereichs angeordnet. Nachteilig wirkt sich die hohe Anzahl von Einzelteilen auf den Fertigungsaufwand aus. Aufgrund des Wärmeeintrags beim Schweißen können Bauteile einen Verzug aufweisen und müssen daher im Anschluss nachgearbeitet werden (durch Richten, Spannungsarmglühen, Schleifen, Spachteln).

Heute wird die Differentialbauweise bei Vollbahnen nur mehr für Lokomotiven, Kleinserien und besondere Konstruktionen verwendet; bei Straßenbahnen hingegen ist sie noch immer weit verbreitet, um nach Unfällen eine einfachere und kostengünstige Reparatur gewährleisten zu können. Ferner erlaubt die Differentialbauweise dünnwandigere Wagenkästen als die Integralbauweise, was insbesondere bei Fahrzeugen mit schmaler Fahrzeugbegrenzungslinie - wie es Straßenbahnfahrzeuge in der Regel sind - von Bedeutung ist.

Werden Versteifungselemente unter anderem auf die Innenseite der Außenhaut gefügt, so kommen teilweise verzugsarme Schweißverfahren zum Einsatz, mit denen Reibrührschweißpunkte erzeugt werden, oder es kommen Klebeverbindungen zum Einsatz, um stärkere Schweißverzüge zu verhindern und eine weitestgehend ebene Außenhaut zu gewährleisten.

Es gibt auch Varianten mit Versteifungselementen, die sich aufgrund ihrer Anordnung kreuzen. So sind beispielsweise zur Aussteifung Stringer an die Aluminiumstruktur angepresst. Quer dazu werden differenziale Versteifungsbauteile, zum Beispiel Spanten, angefügt. In den Kreuzungspunkten müssen entweder die Stringer unterbrochen werden oder die quer dazu angeordneten Spanten, was zu einer lokalen Schwächung der Struktur führt. Alternativ werden die Stringer und Spanten mit unterschiedlichen Höhen ausgeführt. Dadurch wird es ermöglicht, die jeweils höhere Versteifung im Kreuzungspunkt auszunehmen, wodurch die niedrigere Versteifung unterbrechungsfrei durchlaufen werden kann. Auch hierbei werden jedoch die höheren Versteifungen lokal im Bereich der Ausnehmungen geschwächt. In allen Fällen entsteht ein erhöhter Fräsaufwand und damit verbunden ein größerer Materialverschnitt sowie höhere Bearbeitungszeiten als es bei der einfachen Differentialbauweise oder gar der Integralbauweise der Fall ist.

Eine bei Aluminiumrohbauten in Profilbauweise mögliche Ausprägung ist eine Teil-Differentialbauweise, bei welcher die längslaufenden Strukturen aus einschaligen Strangpressprofilen gefügt werden, was die Möglichkeit ergibt, an diese Strangpressprofile bereits Versteifungen, wie Stringer, mit anzupressen, wodurch diese nicht durch zusätzliche Fügeoperationen angebunden werden müssen.

Weist ein Gehäuse eine teildifferentiale Gehäusestruktur auf, so sind Teile dieser Gehäusestruktur als Integralstrukturen ausgebildet, um eine besondere Stabilität und Steifigkeit in einem beschränkten Teilbereich des Gehäuses zu erreichen. Dieses Ziel wird zum Beispiel bei Türsäulen verfolgt, die besonderen mechanischen Belastungen ausgesetzt sind. Daher werden Türsäulen auch bei einer teildifferentialen Gehäusestruktur mit in der Integralbauweise üblichen Querprofilen ausgestaltet. Diese Querprofile müssen allerdings möglichst solide mit der übrigen teildifferential ausgebildeten Gehäusestruktur verbunden werden.

Es besteht also die Aufgabe, eine Fügeverbindung für eine Kombination einer Gehäusekomponente mit einem Querprofil und einer Komponente mit einer differentialen Gehäusestruktur mit längs verlaufenden Stringern zu entwickeln.

Diese Aufgabe wird durch eine teildifferentiale Gehäusekomponente gemäß Patentanspruch 1, einen Wagenkasten gemäß Patentanspruch 13 ein Schienenfahrzeug gemäß Patentanspruch 14 und ein Verfahren zum Fügen einer teildifferentialen Gehäusekomponente gemäß Patentanspruch 15 gelöst.

Die teildifferentiale Gehäusekomponente weist eine erste Teilkomponente mit in Fahrzeuglängsrichtung verlaufenden Stabilisierungselementen, vorzugsweise Stringern und/oder Hohlraumkörpern, auf. Teil der teildifferentialen Gehäusekomponente ist auch eine zweite Teilkomponente mit einem Querprofil. Darüber hinaus weist die teildifferentiale Gehäusekomponente eine feste Verbindung zwischen der ersten Teilkomponente und der zweiten Teilkomponente auf, wobei eine Stirnseite der Stringer der ersten Teilkomponente mit dem Querprofil der zweiten Teilkomponente fest verbunden ist. Als "Stirnseite" der Stringer soll ein Endbereich des Stringers in Längsrichtung verstanden werden. Als Querprofil der zweiten Teilkomponente soll ein Querschnitt bzw. eine Endfläche der zweiten Teilkomponente verstanden werden, die der ersten Teilkomponente in bestimmungsgemäßer Anordnung zugewandt ist.

Mit Querprofilen sind Objekte gemeint, die mit der teildifferentialen Außenhaut verbunden werden. Das müssen nicht zwingend Türsäulen sein. Genauso kann es sich beispielsweise um Abschlussprofile am Ende der Seitenwand einer Gehäusestruktur, insbesondere eines Wagenkastens, handeln, oder des Daches einer Gehäusestruktur, insbesondere eines Wagenkastens, etc. "Quer" meint hier, dass das Profil quer zu den in Fahrzeuglängsrichtung verlaufenden Stringern angeordnet ist.

Vorteilhaft kann durch den stirnseitigen Kontakt zwischen Stringer und zweiter Teilkomponente auch bei teildifferentialen Gehäusekomponenten eine stabile Verbindung zwischen der ersten Teilkomponente und der zweiten Teilkomponente erreicht werden. Die Stabilisierungselemente der ersten Teilkomponente werden in einer zweischnittigen Anbindung mit den Querprofilen verbunden, so dass eine Anbindung der Querprofile in zwei Ebenen erreicht wird.

Der erfindungsgemäße Wagenkasten weist die erfindungsgemäße teildifferentiale Gehäusekomponente auf. Der erfindungsgemäße Wagenkasten teilt die Vorteile der erfindungsgemäßen teildifferentialen Gehäusekomponente.

Das erfindungsgemäße Schienenfahrzeug weist die erfindungsgemäße teildifferentiale Gehäusekomponente auf. Das erfindungsgemäße Schienenfahrzeug teilt die Vorteile der erfindungsgemäßen teildifferentialen Gehäusekomponente.

Bei dem erfindungsgemäßen Verfahren zum Fügen einer teildifferentialen Gehäusekomponente wird eine erste Teilkomponente mit horizontal bzw. in Fahrzeuglängsrichtung verlaufenden Stringern ausgebildet. Außerdem wird eine zweite Teilkomponente mit einem Querprofil ausgebildet. Schließlich wird eine feste Verbindung zwischen der ersten Teilkomponente und der zweiten Teilkomponente generiert, wobei eine Stirnseite der Stringer der ersten Teilkomponente mit dem Querprofil der zweiten Teilkomponente verbunden wird. Das erfindungsgemäße Verfahren zum Fügen einer teildifferentialen Gehäusekomponente ermöglicht eine stabile Verbindung zwischen einer teildifferentialen Gehäusekomponente und einer zweiten Gehäusekomponente, die auch als integrale Komponente ausgebildet sein kann.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer bevorzugten Variante der erfindungsgemäßen teildifferentialen Gehäusekomponente ist das Querprofil der zweiten Teilkomponente zusätzlich mit einer Außenhaut der ersten Teilkomponente fest verbunden. Die Verbindung des Querprofils der zweiten Teilkomponente mit der ersten Teilkomponente erfolgt also quasi doppelt, einmal über den Querschnitt der horizontalen Stabilisierungselemente, insbesondere der Stringer oder Hohlraumkomponenten, und einmal über die Außenhaut der ersten Teilkomponente.

Vorzugsweise ist das Querprofil der zweiten Teilkomponente zusätzlich mit einer Außenhaut der ersten Teilkomponente verschweißt. Das Querprofil wird zum einen, wie beschrieben, mit den Enden der Stringer verbunden und zum anderen mit einer durchgehenden Schweißnaht auf der Außenhaut. Vorteilhaft ist die Stabilität der Verbindung zwischen der ersten Teilkomponente und der zweiten Teilkomponente weiter erhöht.

Die Schweißnähte müssen nicht zwangsläufig auf "Stoß" angeordnet sein. Die Obergurte der stabilisierenden Elemente, insbesondere der Stringer, können auch einen Teil der Querprofile überlappen und dann mit einer Kehlnaht geschweißt, geklebt oder mit ähnlichen Methoden angebunden werden

Bevorzugt ist die Stirnseite der Stringer der ersten Teilkomponente mit der Stirnseite der zweiten Teilkomponente über einen flächigen Kontakt fest verbunden. Als "flächiger Kontakt" soll ein Kontakt verstanden werden, der sich zumindest teilweise über eine Fläche und nicht nur über einen Punkt oder eine Linie erstreckt. Dabei muss nicht die gesamte Fläche in Kontakt stehen, es reicht aus, wenn Teilbereiche der Fläche für den Kontakt genutzt werden. Durch den flächigen Kontakt wird die Verbindung zwischen der ersten Teilkomponente und der zweiten Teilkomponente besonders fest.

In einer Variante der erfindungsgemäßen teildifferentialen Gehäusekomponente ist die erste Teilkomponente mit der zweiten Teilkomponente auf Stoß verbunden. Vorteilhaft erfolgt eine Verbindung der beiden Teilkomponenten ohne Überlapp.

In einer Ausgestaltung der erfindungsgemäßen teildifferentialen Gehäusekomponente umfasst die erste Teilkomponente eine Seitenwand und die zweite Teilkomponente umfasst eine Türsäule. Vorteilhaft kann eine stabile Verbindung zwischen der Seitenwand mit Hilfe der Stirnseite eines oder mehrerer an der Seitenwand angeordneter Stringer und der Türsäule erreicht werden, so dass insbesondere mechanische Belastungen durch ein Betätigen der Tür und infolge der Ausnehmung eines Durchgangs im Türbereich kompensiert werden können.

In einer bevorzugten Ausgestaltung der erfindungsgemäßen teildifferentialen Gehäusekomponente sind die Stringer auf der Innenseite der zweiten Teilkomponente angeordnet. Vorteilhaft bleibt die Außenseite von Verstrebungen ausgenommen, so dass die Außenhaut des Gehäuses glatt bleiben kann.

In einer Variante der erfindungsgemäßen teildifferentialen Gehäusekomponente ist die feste Verbindung durch ein Fügeverfahren hergestellt. Ein Fügeverfahren umfasst das dauerhafte Verbinden von zwei festen Körpern, den Fügeteilen, wobei die Fügeteile mit geometrisch bestimmter Gestalt dauerhaft verbunden werden. Bevorzugt wird ein formloser Stoff für das Fügen verwendet, wie zum Beispiel Klebstoff oder Schweißmaterial. Vorteilhaft wird eine feste und stabile Verbindung zwischen den Teilkomponenten erreicht.

Besonders bevorzugt umfasst das Fügeverfahren eines der folgenden Typen von Verfahren:
- ein Schweißverfahren,
- ein Klebeverfahren.

Ein Schweißverfahren ist besonders stabil und geeignet für Metall-Gehäusekonstruktionen, insbesondere aus Stahl oder Aluminium.

Wird für das Fügen ein Schweißverfahren genutzt, so umfasst das Schweißverfahren bevorzugt einen der folgenden Typen von Schweißverfahren:
- ein Schmelzschweißverfahren,
- ein Reibrührschweißverfahren.

Ein Schmelzschweißverfahren ist ein Verfahren, bei dem zwei oder mehr Materialien durch Wärme verbunden oder verschmolzen werden, indem sie auf Schmelzpunkt erwärmt werden. In den meisten Verfahrensvarianten wird ein Zusatzwerkstoff verwendet.

Beim Reibrührschweißverfahren wird durch ein rotierendes Werkzeug Reibung erzeugt, wodurch die Fügepartner erwärmt werden. In die erwärmten Fügepartner kann dann das rotierende Werkzeug eindringen und diese miteinander verrühren.

In einer bevorzugten Ausgestaltung der erfindungsgemäßen teildifferentialen Gehäusekomponente weist die zweite Komponente im Anschlussbereich bzw. an der Stirnseite eine vorzugsweise angepresste Schweißbadsicherung auf. Eine Badsicherung, insbesondere Schweißbadsicherung, dient dazu zu verhindern, dass die Schweißschmelze beim Schweißen durchsacken kann. Die Badsicherungen sind vorzugsweise direkt an die Profile der Gehäuseteilkomponenten gepresst.

Die Schweißbadsicherung der erfindungsgemäßen teildifferentialen Gehäusekomponente kann auch eine lose Schweißbadsicherung umfassen.

Die Schweißbadsicherung muss nicht zwingend schon am Querprofil angepresst sein. Es kann alternativ auch eine lose Badsicherung hinter den Schweißstoß gelegt und vor dem Schweißen angeheftet, oder anders fixiert werden.

In einer Ausgestaltung einer teildifferentialen Gehäusekomponente weisen die Stringer Obergurte auf, die mit einer Schweißbadsicherung der ersten Komponente verschweißt sind. Als Obergurte sind Komponenten zu verstehen, die als Halterungen für weitere Elemente, insbesondere Teile der Inneneinrichtung, genutzt werden können. Bei einem T-förmigen Stringer umfasst der Obergurt zum Beispiel den Querbalken des T.

Die Erfindung wird im Folgenden unter Hinweis auf die beigefügten Figuren anhand von Ausführungsbeispielen noch einmal näher erläutert. Es zeigen:
- FIG 1: eine perspektivische Darstellung einer Fügeverbindung zwischen einer herkömmlichen, in Integralbauweise ausgebildeten Seitenwand eines Wagenkastens und einer Türsäule,
- FIG 2: eine schematische Darstellung einer Fügeverbindung einer teildifferentialen Gehäusekomponente gemäß einem Ausführungsbeispiel der Erfindung,
- FIG 3: eine schematische Darstellung einer Fügeverbindung einer teildifferentialen Gehäusekomponente gemäß einem Ausführungsbeispiel der Erfindung mit Stringern mit einem L-förmigen oder T-förmigen Querprofil,
- FIG 4: eine schematische Querschnittsdarstellung einer Fügeverbindung einer teildifferentialen Gehäusekomponente gemäß einem Ausführungsbeispiel der Erfindung mit Stringern mit einem T-förmigen Querprofil,
- FIG 5: eine schematische Darstellung eines Schienenfahrzeugs gemäß einem Ausführungsbeispiel der Erfindung,
- FIG 6: ein Flussdiagramm, welches ein Verfahren zur Montage einer teildifferentialen Gehäusekomponente gemäß einem Ausführungsbeispiel der Erfindung veranschaulicht.

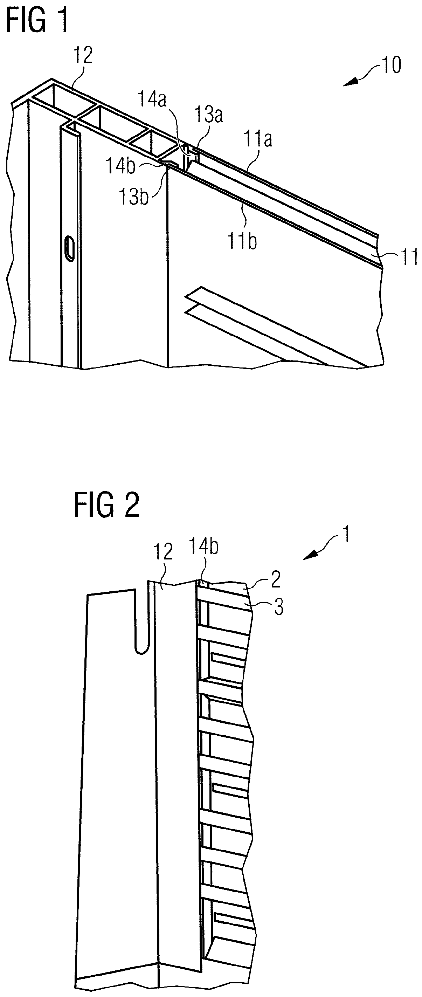

In FIG 1 ist eine perspektivische Darstellung einer Fügeverbindung zwischen einer herkömmlichen, in Integralbauweise ausgebildeten Seitenwand 11 eines Wagenkastens und einer Türsäule 12 gezeigt. In FIG 1 ist also eine herkömmliche Gehäusekomponente 10 in Integralbauweise dargestellt. Die Gehäusekomponente 10 umfasst die erwähnte Seitenwand 11, welche eine Doppelwand mit zwei Einzelwänden bzw. eine Außenwand 11a und eine Innenwand 11b umfasst. Die Seitenwand 11 umfasst also ein zweischnittiges Querprofil. Dabei ist die Innenwand 11b dem Betrachter zugewandt angeordnet und die Außenwand 11a ist von dem Betrachter abgewandt bzw. durch die Innenwand 11b verdeckt angeordnet. Teil der Gehäusekomponente 10 ist auch die erwähnte Türsäule 12. Das Querprofil der Türsäule 12 ist ebenfalls zweischnittig, so dass die beiden Querprofile der Seitenwand 11 und der Türsäule 12 momentensteif miteinander verbunden werden können. D.h. die Türsäule 12 weist ebenfalls eine Außenwand 12a und eine Innenwand 12b auf, deren Enden 14a, 14b mit den Enden 13a, 13b der Außenwand 11a und der Innenwand 11b der Seitenwand 11 durch einen Schweißvorgang verbunden sind.

In FIG 2 ist eine schematische Darstellung einer Fügeverbindung einer teildifferentialen Gehäusekomponente 1 gemäß einem Ausführungsbeispiel der Erfindung gezeigt. Die teildifferentiale Gehäusekomponente 1 umfasst eine als teildifferentiale Flachbaugruppe ausgebildete Seitenwand 2. Die Seitenwand weist zu ihrer Verstärkung eine Mehrzahl von parallel angeordneten Stringern 3 auf. Teil der teildifferentialen Gehäusekomponente 1 ist auch eine Türsäule 12, welche in integraler Bauweise ausgeführt ist. Um nun auch für eine Seitenwand 2, welche als teildifferentiale Flachbaugruppe ausgebildet ist, eine zweischnittige Anbindung an die Türsäule 12 auszubilden, sind die Gurte der Stringer 3 mit dem Querprofil der Türsäule 12 verbunden und ist die Querschnittsfläche der Seitenwand 2 ebenfalls mit dem Querprofil der Türsäule 12 verbunden. In FIG 2 ist auch ein Ende der Innenwand 14b der Türsäule zu erkennen.

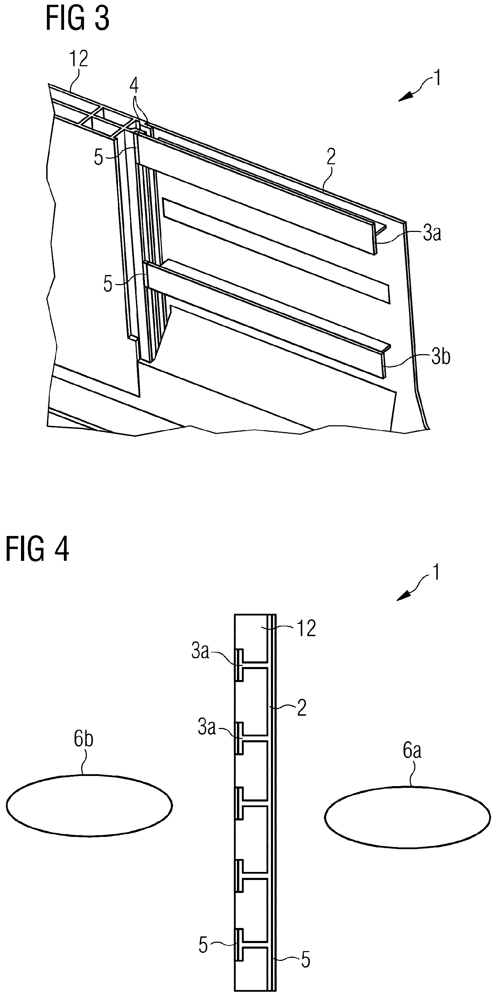

In FIG 3 ist eine schematische Darstellung einer Fügeverbindung einer teildifferentialen Gehäusekomponente 1 gemäß einem Ausführungsbeispiel der Erfindung mit einer Seitenwand 2 mit Stringern 3a, 3b mit einem T-förmigen oder L-förmigen Querschnitt gezeigt. Eine in FIG 3 ebenfalls gezeigte Türsäule 12 umfasst im Anschlussbereich auf der Außenseite und der Innenseite eine angepresste Schweißbadsicherung 4. Auf diese Weise können die Obergurte der Stringer 3a, 3b, die in der in FIG 3 dargestellten beispielhaften Ausführungsform im Querschnitt T-förmig oder L-förmig ausgebildet sind, mit der inneren Schweißbadsicherung 4 über Schweißnähte 5 verschweißt sein. Dadurch ist auch bei dieser Bauweise eine momentensteife Anbindung zwischen der Türsäule 12 und der Seitenwand 2 möglich. Die Schweißnähte können manuell oder per Roboter automatisiert geschweißt sein, da die Zugänglichkeit der Schweißnähte für Roboteranlagen gegeben ist.

In FIG 4 ist eine schematische Querschnittsdarstellung einer Fügeverbindung einer teildifferentialen Gehäusekomponente 1 gemäß einem Ausführungsbeispiel der Erfindung mit einer Seitenwand 2, Stringern 3a mit einem T-förmigen Querschnitt und einer Türsäule 12 gezeigt. Weiterhin sind auch Schweißnähte 5 gezeigt, mit denen die Seitenwand 2 bzw. die Außenhaut und die Stringer 3a mit der Türsäule 12 bzw. der Stirnseite der Türsäule 12 fest verbunden sind. Außerdem ist die Außenseite 6a und die Innenseite 6b relativ zu der Seitenwand 2 durch Ellipsen symbolisiert.

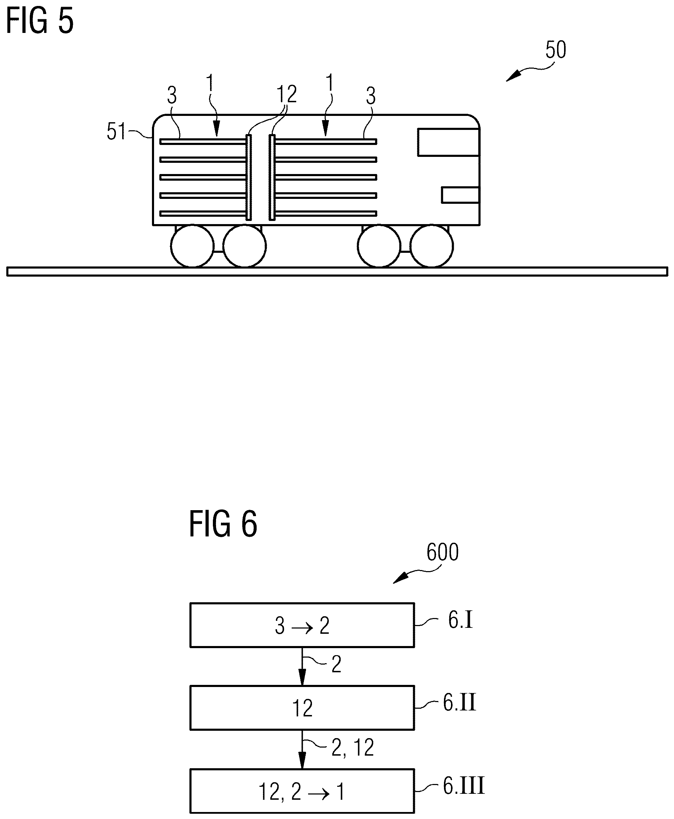

In FIG 5 ist eine schematische Darstellung eines Schienenfahrzeugs 50 gemäß einem Ausführungsbeispiel der Erfindung gezeigt. Das Schienenfahrzeug 50 weist einen Wagenkasten 51 auf, welcher zwei Gehäusekomponenten 1 gemäß einem Ausführungsbeispiel der Erfindung umfasst. Die Gehäusekomponenten 1 umfassen horizontal verlaufende Stringer 3 und Türsäulen 12, die durch Schweißnähte (nicht gezeigt) miteinander verbunden sind.

In FIG 6 ist ein Flussdiagramm 600, welches ein Verfahren zum Fügen einer teildifferentialen Gehäusekomponente 1 veranschaulicht, gezeigt.

Bei dem Schritt 6.I erfolgt ein Ausbilden einer Seitenwand 2 als erste Teilkomponente mit horizontal verlaufenden Stringern 3.

Bei dem Schritt 6.II erfolgt ein Ausbilden einer Türsäule 12 als zweite Teilkomponente mit einem Querprofil.

Bei dem Schritt 6.III wird eine feste Verbindung zwischen der ersten Teilkomponente und der zweiten Teilkomponente generiert, wobei eine Stirnfläche der Stringer 3 der Seitenwand 2 mit einer Stirnfläche der Türsäule 12 im flächigen Kontakt miteinander zu einer teildifferentialen Gehäusekomponente 1 verschweißt werden.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Unabhängig vom grammatikalischen Geschlecht eines bestimmten Begriffes sind Personen mit männlicher, weiblicher oder anderer Geschlechteridentität mit umfasst.

## Patentansprüche

1. Teildifferentiale Gehäusekomponente (1), aufweisend:
- eine erste Teilkomponente (2) mit in Fahrzeuglängsrichtung verlaufenden Stringern (3, 4a, 3b),
- eine zweite Teilkomponente (12) mit einem Querprofil,
- eine feste Verbindung zwischen der ersten Teilkomponente (2) und der zweiten Teilkomponente (12), wobei eine Stirnseite der Stringer (3, 3a, 3b) der ersten Teilkomponente (2) mit dem Querprofil der zweiten Teilkomponente (12) fest verbunden ist.

2. Teildifferentiale Gehäusekomponente (1), wobei das Querprofil der zweiten Teilkomponente (12) zusätzlich mit einer Außenhaut der ersten Teilkomponente (2) fest verbunden ist.

3. Teildifferentiale Gehäusekomponente nach Anspruch 1 oder 2,
wobei die erste Teilkomponente (2) mit der zweiten Teilkomponente (12) auf Stoß verbunden ist.

4. Teildifferentiale Gehäusekomponente nach einem der vorstehenden Ansprüche, wobei die erste Teilkomponente (2) eine Seitenwand umfasst und die zweite Teilkomponente (12) eine Türsäule umfasst.

5. Teildifferentiale Gehäusekomponente nach einem der vorstehenden Ansprüche, wobei die Stringer (3, 3a, 3b) auf der Innenseite der zweiten Teilkomponente (12) angeordnet sind.

6. Teildifferentiale Gehäusekomponente nach einem der vorstehenden Ansprüche, wobei die feste Verbindung durch ein Fügeverfahren hergestellt ist.

7. Teildifferentiale Gehäusekomponente nach Anspruch 5,
wobei das Fügeverfahren eines der folgenden Typen von Verfahren umfasst:
- ein Schweißverfahren,
- ein Klebverfahren.

8. Teildifferentiale Gehäusekomponente nach Anspruch 6,
wobei das Schweißverfahren eines der folgenden Typen von Schweißverfahren umfasst:
- ein Schmelzschweißverfahren,
- ein Reibrührschweißverfahren.

9. Teildifferentiale Gehäusekomponente nach einem der vorstehenden Ansprüche, wobei die zweite Teilkomponente (12) im Anschlussbereich eine Schweißbadsicherung aufweist.

10. Teildifferentiale Gehäusekomponente nach einem der vorstehenden Ansprüche, wobei die Schweißbadsicherung einen der folgenden Typen aufweist:
- eine angepresste Schweißbadsicherung,
- eine lose Schweißbadsicherung.

11. Teildifferentiale Gehäusekomponente nach einem der vorstehenden Ansprüche, wobei die Stringer (3a, 3b) Obergurte aufweisen, die mit einer Schweißbadsicherung der ersten Teilkomponente (2) verschweißt sind.

12. Teildifferentiale Gehäusekomponente nach Anspruch 11,
wobei das Querprofil der zweiten Teilkomponente (12) zusätzlich mit einer Außenhaut der ersten Teilkomponente (2) verschweißt ist.

13. Wagenkasten (51), aufweisend eine teildifferentiale Gehäusekomponente (1) nach einem der vorstehenden Ansprüche.

14. Schienenfahrzeug (50), aufweisend einen Wagenkasten (51) nach Anspruch 13.

15. Verfahren zum Fügen einer teildifferentialen Gehäusekomponente (1) nach einem der vorstehenden Ansprüche 1 bis 12,
aufweisend die Schritte:
- Ausbilden einer ersten Teilkomponente (2) mit horizontal verlaufenden Stringern (3, 3a, 3b),
- Ausbilden einer zweiten Teilkomponente (12) mit einem Querprofil,
- Generieren einer festen Verbindung zwischen der ersten Teilkomponente (2) und der zweiten Teilkomponente (12), wobei eine Stirnseite der Stringer (3, 3a, 3b) der ersten Teilkomponente (2) mit dem Querprofil der zweiten Teilkomponente (12) fest verbunden wird.
